# EUROPEAN PATENT APPLICATION

(11) **EP 4 826 808 A1**
(43) Date of publication of application: **21.10.2026**
(21) Application number: 26167593.8
(22) Date of filing: 25.03.2026
(51) Int. Cl.: H01M 8/04014, H01M 8/0432, H01M 8/2475, H01M 8/04492

(54) **THERMAL MANAGEMENT SYSTEM FOR FUEL CELL**

(30) Priority: 14.04.2025 FI 20255336
(71) Applicant: KELLUU OY, 80330 Reijola (FI)
(72) Inventor: Lintu, Jouni, 80330 Reijola (FI); Henderson, Jean-Paul, 80330 Reijola (FI); Kärki, Hermanni, 80330 Reijola (FI); Ratilainen, Petteri, 80330 Reijola (FI)
(74) Representative: Moosedog Oy

(57) **Abstract**

The present disclosure provides a thermal management system 100 for a fuel cell 102. The fuel cell 102 comprises an intake port 104 and a discharge port 106 to discharge an exhaust stream 108 exiting from the fuel cell 102. The system 100 comprises a housing 110 that houses the fuel cell 102. The housing 110 comprises an air inlet 112 to receive an ambient air stream, an exhaust outlet 116, and a merge section 118 fluidically coupled with the exhaust outlet 116 and the discharge port 106. The merge section 118 receives the exhaust stream 108 and the ambient air stream 114 to create a mixed air stream. A flap 120 is disposed at the exhaust outlet 116 to control a recirculation fraction 122 and a discharge fraction 124 of the mixed air stream. A sensing unit 126 generates an environmental condition signal. A control unit 128 processes the environmental condition signal to adjust the flap 120.

## Description

### TECHNICAL FIELD

The present disclosure generally relates to thermal management systems. Further, the present disclosure particularly relates to a thermal management system for a fuel cell.

### BACKGROUND

Fuel cells' high efficiency and minimal emissions make them a popular energy source for a variety of applications. The fuel cells use an electrochemical reaction between hydrogen and oxygen to produce energy. As a by-product of the process, heat is also produced, so maintaining ideal working conditions requires an efficient thermal management system. Passive cooling techniques that rely on natural convection and radiation are commonly employed for heat dispersion. However, the passive cooling techniques often fail to provide adequate temperature control, particularly in changing environments. Furthermore, active cooling systems that employ liquid or air-based cooling techniques are also employed. Heat exchangers, fans, and pumps are used in the active cooling systems to regulate the temperature. However, the increased energy usage and complexity of the system present many challenges.

Exhaust management also affects fuel cell thermal regulation. Traditionally, exhaust gasses are released directly onto the surrounding environment. However, the effectiveness of the heat dissipation is impacted by temperature variations in the surrounding environment. Furthermore, conventional systems don't have dynamic control over exhaust recirculation, which results in less-than-ideal housing temperature regulation. Humidity levels within the housing also impact fuel cell performance, wherein excess moisture accumulation affects component longevity. Conventional sensing mechanisms often provide limited environmental data, restricting adaptive control of recirculation and discharge parameters.

In light of the above discussion, there exists an urgent need for solutions that may overcome the problems associated with conventional systems and techniques for thermal management and exhaust regulation in fuel cells.

### SUMMARY

An aim of the present disclosure is to provide a system to regulate thermal conditions in a fuel cell by facilitating controlled heat dissipation and airflow management. The system enables control over heat exchange processes by responding to environmental variations. The system assesses surrounding conditions and determine necessary adjustments. Various factors, including temperature and airflow dynamics, influence operational states to maintain stability. Continuous monitoring and responses balance the thermal conditions under changing circumstances. The system utilizing real-time data evaluation enhances overall effectiveness by enabling adjustments align with varying requirements. The system enables efficient thermal control without reliance on fixed parameters, allowing flexible adaptation to diverse environments.

Throughout the description and claims of this specification, the words "comprise" and "contain" and variations of the words, for example "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of a thermal management system as per one embodiment of the present disclosure.
FIG. 2 illustrates a merge section as per one embodiment of the present disclosure.
FIG. 3 illustrates a flap, in accordance with the embodiments of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a thermal management system for a fuel cell, wherein the fuel cell comprising an intake port, and a discharge port to discharge an exhaust stream exiting from the fuel cell, the system comprising:
a housing is configured to house the fuel cell, wherein the housing comprising:
an air inlet to receive an ambient air stream;
an exhaust outlet;
a merge section is fluidically coupled with the exhaust outlet, the discharge port and the exhaust outlet, wherein the merge section is configured to receive the exhaust stream and the ambient air stream to create a mixed air stream;
a flap is disposed at the exhaust outlet and configured to control at least one of:
   a recirculation fraction of the mixed air stream, wherein the recirculation fraction is directed within the housing; and
   a discharge fraction of the mixed air stream, wherein the discharge fraction is directed into an ambiance environment through the exhaust outlet, wherein the discharge fraction is directed at an angle with respect to the recirculation fraction, wherein the angle is selected from 1-89 degrees;
a sensing unit is configured to generate an environmental condition signal upon sensing at least one of:
   a first temperature of the received ambient air stream;
   a humidity level of the housing;
   a second temperature of the exhaust stream; and
   a third temperature of the fuel cell;
a control unit is operatively coupled to the sensing unit and the flap, wherein the control unit is configured to process the generated environmental condition signal to determine a required position of the flap to dynamically adjust the flap to regulate the recirculation fraction and the discharge fraction.

As used herein, the term *"thermal management system"* refers to a system that regulate temperature conditions in an ambience where heat generation and dissipation occurs. The thermal management system manages thermal parameters by facilitating heat transfer, airflow management, or phase change mechanisms to maintain operational stability. The term *"fuel cell"* as used here refers to a device (electrochemical) that may utilize an oxidizing agent, such as a stream of gaseous oxygen, and a stream of gaseous hydrogen (H₂) as fuel to undergo reactions that convert chemical energy into electrical energy.

The fuel cell comprises an intake port to receive a fuel stream. The term *"intake port"* as used throughout the present disclosure refers to an entry point through which fuel such as H₂ enters into the fuel cell. The intake port enables controlled supply of fuel and oxidising agent into the fuel cell to regulate internal conditions. The H₂ (upon introduction) undergoes an electrochemical reaction (at an anode) and splits into protons and electrons. While protons travel through an electrolyte membrane to produce electrical energy, electrons travel through an external circuit. When protons and electrons recombine at the cathode with an oxidant like O₂, water (H₂O) is produced. The fuel cell further comprises a discharge port to discharge an exhaust stream exiting from the fuel cell. The term *"discharge port",* as used throughout the present disclosure, provides controlled expulsion of residual gases, water vapour, or condensed liquid by-products to maintain operational balance within the fuel cell. The discharge stream comprises unused hydrogen, nitrogen (if used as a carrier gas), water, and traces of heat-dissipating vapours.

The thermal management system comprises a housing to house the fuel cell. The term *"housing"* as used throughout the present disclosure refers to an enclosure to contain, support, or protect internal components of fuel cell from external influences. The enclosure provides structural integrity, environmental isolation, and controlled interaction between enclosed and external elements of fuel cell. The housing is fabricated from durable and thermally resistant materials, such as stainless steel, aluminium alloys, or composite materials. A form factor of housing is dependent on a specific configuration of the fuel cell and the system's space constraints. The housing is configured to house the fuel cell. As employed herein throughout the current disclosure, the term *"house"* is employed to mean the act of enclosing, supporting, locating, or integrating one or more elements within a predefined spatial form or enclosure, whereby housed elements are mechanically restrained, shielded from ambient influences, and functionally connected with other system elements. The fuel cell is securely mounted or anchored within the housing using appropriate fastening mechanisms, such as brackets, mounting plates, or clips, such that the fuel cell remains firmly in place during operation and prevents any displacement or damage due to vibrations or external forces. The secure attachment of the fuel cell within the housing improves safety and stability of the fuel cell.

The housing comprises an air inlet that receives an air stream and an exhaust outlet. The term *"air inlet"* as used throughout the present disclosure refers to an opening that permits controlled entry of ambient air into the housing for circulation, cooling, and humidity control. The air inlet regulates airflow properties, including velocity, pressure, and filtration. The housing comprises an exhaust outlet that enables a controlled discharge of the exhaust stream from the housing. The term *"exhaust outlet"* as used throughout the present disclosure refers to an exit passage to expel exhaust gases, vapours, or heated air from the housing. The exhaust outlet enables controlled removal of thermal by-products to regulate temperature conditions.

The housing comprises a merge section that is in fluid communication with the exhaust outlet, discharge port, and air inlet. The term *"merge section"* as used throughout the current disclosure refers to a region where multiple fluid streams converge before proceeding further. The merge section optimizes fluid interaction, homogenize temperature distribution, or regulate flow characteristics. The merge section comprises an aerodynamic profile to facilitate the controlled and efficient mixing of the exhaust stream and the ambient air stream. The merge section comprises internal guiding surfaces that may direct the exhaust stream and the ambient air stream towards a common flow path. The merge section consists of a transitional area where the ambient air stream and the exhaust stream combine to create the mixed air stream. As used throughout the present disclosure, the term *"mixed air stream"* refers to a composite flow resulting from the combination of two or more distinct fluid streams, specifically an exhaust stream discharged from the fuel cell and an ambient air stream introduced through the air inlet. The mixed air stream is utilized for various downstream thermal management or discharge control functions. The composition of the mixed air stream dynamically varied based on operational parameters such as flow rate, temperature, and back pressure. The mixed air stream comprises varying proportions of the exhaust stream and the ambient air stream based on operational requirements and intended thermal regulation outcomes. For example, the mixed air stream is created by blending approximately 70% exhaust stream and 30% ambient air stream, facilitating moderate dilution of thermal by-products while maintaining flow momentum. In another instance, the mixed air is created by mixing equal amount of exhaust stream and ambient air stream, allowing balanced distribution of temperature and pressure along the downstream path. In yet another example, a higher ratio of ambient air-such as 70% ambient air stream and 30% exhaust stream is used to create mixed air stream to reduce the temperature and concentration of exhaust constituents prior to venting or redirection.

The housing comprises a flap that is disposed at the exhaust outlet and controls at least one of a recirculation fraction of the mixed air stream and a discharge fraction of the mixed air stream. The recirculation fraction is directed within the housing, while the discharge fraction is directed into an ambient environment through the exhaust outlet. The term *"flap"* as used throughout the present disclosure refers to a movable component that manages fluid flow by adjusting position within a path. The flap controls a flow rate, a pressure distribution, or directional discharge characteristics. Flaps are operated through mechanical linkages, pneumatic systems, or electrostatic mechanisms. The flap comprises a pivoting mechanism that enables angular adjustment to regulate the proportions of the recirculation fraction and the discharge fraction. The flap influences airflow patterns within the housing by directing the mixed air stream either towards internal circulation or external discharge. The flap is operable in response to temperature and pressure variations within the housing. The term *"recirculation fraction"* as used throughout the present disclosure refers to a part of a fluid stream that is reverted back into housing rather than being discharged into an external ambience. The recirculation fraction is managed to control thermal conditions, maintain energy efficiency, or optimize system stability. The term *"discharge fraction"* refers to a part of the fluid stream that leaves the system through an exhaust or outlet passage. The discharge fraction is regulated to control temperature regulation, maintain airflow balance, or maintain compliance with environmental discharge standards. The flap also serves as a flow splitter that splits the mixed air stream into a recirculation fraction and a discharge fraction. Apart from the pivoting mechanism, the flap incorporates segmental deflectors, variable geometry surfaces, or adjustable vanes through which the cross-sectional area available for every fraction and division can be dynamically adjusted depending on operating parameters. For example, the flap is to be actuated to allow approximately 60% of the mixed air stream to be recirculated and 40% to be discharged during moderate cooling phases. In another instance, the flap is adjusted to enable 80% recirculation and 20% discharge for increased heat retention. Conversely, under high thermal load, the flap increases the discharge fraction to 70%, reducing the recirculation fraction to 30%. The thermal load, ambient conditions, and the airflow of housing needs all influence the ratios of each fraction. The ratios of each fraction are dynamically adjusted according to the housing's airflow needs, environmental factors, and real-time thermal load. To prevent water condensation on the components of fuel cell, the recirculation-to-discharge fraction ratio is controlled to manage the internal humidity of housing. Water condensation takes place when cold surrounding environments are encountered by housing, especially at temperatures lower than 278 K, where the temperature difference between internal air and external environment creates conditions favourable to moisture accumulation and droplet formation on surfaces. The flap increases the discharge fraction to release humid air and reduce the internal moisture level for fighting water condensation or a moist atmosphere inside the housing. For instance, the flap provides 60% recirculation and 40% discharge under normal conditions, or scaled down to 30% recirculation and 70% discharge in cold conditions.

The discharge fraction is directed at an angle with respect to the recirculation fraction, wherein the angle is selected from 1 to 89 degrees such as 1-5 degrees, 6-10 degrees, 11-15 degrees, 16-20 degrees, 21-25 degrees, 26-30 degrees, 31-35 degrees, 36-40 degrees, 41-45 degrees, 46-50, 51-55 degrees, 56-60 degrees, 61-65 degrees, 66-70 degrees, 71-75 degrees, 76-80 degrees, 81-85 degrees, 86-89 degrees, 1-10 degrees, 11-20 degrees, 21-30 degrees, 31-40 degrees, 41-50 degrees, 51-60 degrees, 61-70 degrees, 71-80 degrees, 81-89 degrees, 1-20 degrees, 21-40 degrees, 41-60 degrees, 61-80 degrees, 1-30 degrees, 31-60 degrees and 61-89 degrees. By introducing a specific angle between the recirculation fraction and the discharge fraction, the flap is better able to divide the mixed air stream into two distinct flows. Lower angular separation (such as about 1 degrees) produces a shallow bifurcation, which is favourable if more of the mixed air stream needs to be returned for recirculation in order to extended contact with the fuel cell for internal heat transfer. Further, increased angular separation (e.g., to 88 degrees) allows deflection of the discharge stream away from the housing, and the increased angular separation is especially beneficial under conditions of high thermal load or moisture build-up, when speedy discharge of the exhaust stream is needed to avoid internal condensation. Angular separation of discharge fraction and recirculation fraction is also useful in flow optimization by minimizing turbulent interference between the discharged and recirculated air. Angular separation also prevents re-entrainment of moisture-laden discharged air that back into the housing, thereby maintaining internal humidity of the housing is below condensation points. The dynamic Angular separation is achieved by the adjustability of flap, which is controlled by control unit to modify the flap angle in response to real-time environmental condition signals.

The term *"sensing unit",* as used throughout the present disclosure, refers to a collection of electronic or electrical components, which are configured to determine one or more environmental parameters to provide real-time data for system regulation and performance optimization. The sensing unit comprises a plurality of sensors capable of monitoring environmental parameters such as temperature, humidity, pressure, airflow velocity, and related physical properties within and around the fuel cell. The sensors operate through electrical signal processing and data transmission circuits, enabling the sensing unit to generate accurate, responsive inputs for control unit. The sensing unit generates an environmental condition signal upon sensing at least one of the first temperature of a received ambient air stream, a humidity level of a housing, a second temperature of an exhaust stream, and a third temperature of a fuel cell. The sensing unit comprises a first temperature sensor that detects the first temperature of the received ambient air stream, which entered into the housing. The sensing unit comprises a humidity sensor that measures the humidity level of the housing to assess moisture accumulation within the housing and maintain optimal operational conditions. The sensing unit comprises a second temperature sensor that measures the second temperature of the exhaust stream, wherein the second temperature sensor enables the identification of thermal fluctuations and heat dissipation rates. The sensing unit also comprises a third temperature sensor that monitors the third temperature of the fuel cell, wherein the third temperature sensor assists in determining the thermal profile of the fuel cell during operation.

The term *"control unit"* refers to a processing component that evaluates input signals and generates corresponding output actions for system regulation. The control unit comprises hardware and software elements to execute logical operations based on predefined criteria. Control unit receive sensor data, process environmental variables, and generate actuation signals for regulating operational components. The control unit is operatively coupled to the sensing unit and the flap, wherein the control unit processes the generated environmental condition signal to determine a required position of the flap to dynamically adjust the flap to regulate a recirculation fraction and a discharge fraction. The control unit receives the environmental condition signal and executes an analytical process to determine deviations from a predefined thermal threshold. Based on the comparison of measured values with stored predefined threshold values, the control unit determines a required adjustment of the flap to optimize air recirculation and exhaust discharge. A control technique embedded within the control unit processes the environmental condition signal and outputs a control signal to actuate the flap. The control signal enables mechanical movement of the flap, wherein the flap is repositioned (incrementally or continuously) to achieve a desired air recirculation fraction and discharge fraction. The control unit operates autonomously or in response to user-defined settings, wherein operational parameters of the control unit are adaptable based on external conditions. The term *"environmental condition signal"* as used throughout the present disclosure refers to an output generated by a sensing unit in response to the detected environmental variables. The environmental condition signal represents data (quantitative or qualitative) regarding temperature, humidity, or fluid flow characteristics. The control unit is operatively coupled to the sensing unit, the flap, and other components of the system such as data storage modules, and status monitoring interfaces. The communicable coupling is achieved through wired (such as Inter-Integrated Circuit, Serial Peripheral Interface, Universal Asynchronous Receiver-Transmitter, RS-485 etc.) or wireless data transmission such as Bluetooth, WIFI, Zigbee etc.

The system described in the present disclosure offers multiple technical benefits. The control unit prevents moisture build up inside the housing by controlling the position of flap in response to environmental variables. In cold ambience where the temperature may drop below 278 K (5°C), the control of humidity reduces the possibility of water condensation on internal surfaces (including the fuel cell). The controlled discharge of humid air reduces internal saturation and enhances operational safety. The system also eliminates or reduce requirement of a dedicated heating unit (to remove moisture from housing) by utilizing residual heat from the exhaust stream to raise the internal temperature, enabling moisture evaporation and improving thermal efficiency. Additionally, the recirculation of a portion of the mixed air stream supports passive cooling of the fuel cell, thus maintaining an optimal operating range and preventing overheating without the use of a separate cooling module. Thus, system become energy efficiency by reducing or eliminating requirement of dedicated heating and/or cooling unit. Moreover, the thermal management system enables adaptability of the fuel cell in diverse application environments such as automobiles, airships, unmanned aerial vehicles (UAVs), cold storage-powered systems, and remote power generation units.

Optionally, the housing may comprise a fan to create a negative pressure within the housing, wherein the created negative pressure causes suction of the ambient air stream through the air inlet. The fan improves thermal stability by creating negative pressure inside the housing, which permits controlled air flow. The requirement of temperature management further helps to establish airflow rate, pressure differential, and fan speed that will preserve ideal thermal conditions and enable efficient heat dissipation. The fan facilitates active airflow management, enabling efficient control over internal temperature gradients and moisture removal within the housing. By creating negative pressure and promoting the uniform distribution of air across the surface of fuel cell, the fan enhances the efficiency of air intake through the air inlet and maintains thermal balance. By preventing the formation of localized hot spots, preventing wear and tear of temperature-sensitive components. The suction effect enables evacuation of humid air, supporting the prevention of condensation and corrosion inside the housing. The fan also allows dynamic adjustment of airflow rate and pressure differential in real time, in coordination with signals from the control unit, enabling adaptive response to varying thermal loads.

In an embodiment, the fuel cell may be positioned within a predetermined gap between the exterior and the interior surfaces of housing to allow for controlled airflow circulation. Recirculated airflow interacts with the fuel cell surface in a thermal regulation zone defined by the distance between the fuel cell and the housing. The spacing between the fuel cell and housing is maintained through structural supports, thermal insulation spacers, or mounting brackets that secure the fuel cell within the housing. By selecting the gap between the fuel cell and the housing according to the needs of airflow, localized temperature variations are prevented. By allowing the recirculation fraction (of the exhaust stream) to move around the fuel cell, the chosen gap facilitates efficient heat transfer. Depending on the design limitations, airflow velocity, and thermal load requirements, the distance between the fuel cell and the housing may variate. For example, the gap may range from 10 millimetres to 150 millimetres, depending on the specific application. A short-range gap of 10 mm to 50 mm is used for compact systems where rapid heat transfer is desired under high airflow velocity. A broad-range spacing of 50 mm to 100 mm may be employed in systems requiring moderate convective exchange and airflow flexibility. The gap between the fuel cell and the housing enhances the uniformity of airflow around fuel cell, lowered thermal resistance, and increased cooling efficacy. The excess heat can be dissipated in gap without creating high-pressure zones. In addition, the spatial distance of fuel cell from the inner wall of the housing provides a shock buffer from mechanical shocks, allows for the drainage of moisture, and facilitates easier maintenance access.

Optionally, the internal surface of the housing comprises at least one flow director that is configured to control the flow of air. The flow director is positioned to guide the recirculation fraction around the fuel cell to optimize heat exchange and airflow uniformity. The term *"flow director",* as used throughout the present disclosure, refers to a mechanical structure that modifies the direction and behaviour of airflow i.e., recirculation fraction through geometric shaping and spatial orientation. The flow director influences velocity distribution and reduce flow separation. The flow director reduces turbulence and maintains ordered airflow patterns. The flow director is configured to guide the recirculation fraction towards the surface of the fuel cell, thereby enhancing contact between the recirculation fraction and the fuel cell exterior for improved convective heat transfer. The flow director is positioned within space between the housing and the fuel cell, and enables direction, speed and distribution of the airflow along targeted regions of the fuel cell surface. The flow director could be made up of ducted channels, surface contours, deflector plates, guide fins, or fixed vanes. The housing, dimensions of fuel cell and geometry determine how many flow directors are needed; in order to promote symmetrical airflow, at least two flow directors can be placed on opposing sides. In an example, the system may include between 2 to 8 flow directors, evenly spaced along the inner circumference of the housing. The spacing between two adjacent flow directors may range from 20 millimetres to 150 millimetres, depending on the design requirements for flow uniformity and the dimensions of the fuel cell surface. The flow director allows efficient routing of recirculation along the fuel cell surface, thereby enhancing thermal uniformity, reducing localized heating, improving cooling efficiency, and prevention of moisture condensation on surface of the fuel cell.

Optionally, at least one turbulence-inducing vane may also be present on the interior surface of the housing to change the flow pattern of the recirculation fraction. The term *"turbulence-inducing vane",* as used throughout the present disclosure, refers to a mechanical element designed to intentionally generate disturbances or fluctuations in the laminar flow of the recirculation fraction. Induced turbulence improves convective heat transfer characteristics and overall thermal performance by increasing mixing, local air velocity variations, and the vigorous interaction of airflow with the fuel cell surface. The various configurations of turbulence-inducing are used and selected from angled blades, serrated fins, perforated inserts, or twisted tabs, each tailored to specific airflow dynamics. For regulating the intensity of the generated turbulence, the surface of vane may have textured contours, notches, or curvature. To create non-uniform turbulence profiles, the vanes may be equipped with variable pitch or offset angles. The size, shape, and geometry of the housing and the thermal regulation zone are taken into consideration when choosing the number of vanes. In an example, the system may include 3 to 12 turbulence-inducing vanes arranged symmetrically or asymmetrically along the internal perimeter of the housing. The spacing between two adjacent vanes (turbulence-inducing) may range from 15 millimetres to 100 millimetres, depending on the required degree of turbulence, airflow rate, and fuel cell surface coverage. Under different load and environmental circumstances, the generated turbulent airflow enhances performance, extends operational life, and supports uniform cooling of the fuel cell surface.

In yet another embodiment, the merge section may comprise multiple sequential sections, which regulates the mixing and flow of exhaust and intake air streams. When the exhaust stream enters the merge section, a first section is positioned at the entry point. The first section receives the exhaust stream, enabling stabilization prior to additional downstream flow. The first section is followed downstream by a second section, wherein a cross-sectional area of second section is smaller than that of the first section. The aforesaid decrement se in cross-sectional area enhances flow momentum and prevents backpressure build-up by increasing velocity. A third section is disposed downstream of the second section, wherein the cross-sectional area of the third section is larger than a cross-sectional area of the second section. The aforesaid expansion reduces velocity and promotes uniform temperature distribution by minimizing turbulence. By enabling controlled airflow recirculation and exhaust release, the merge section aids the housing to avoid excessive thermal accumulation. In order to prevent flow separation, the merge section integrates the principles of fluid dynamics to enable transition between the aforesaid sections. In order to maximize pressure recovery, the cross-sectional transition ratio between the first section and the second section usually falls between 1.2:1 and 2.5:1 (selected from distinct ranges such as 1.2:1 to 1.5:1, 1.3:1 to 1.7:1, 1.4:1 to 1.8:1, 1.5:1 to 2.0:1, 1.6:1 to 2.1:1, 1.7:1 to 2.3:1, 1.8:1 to 2.4:1, 2.0:1 to 2.5:1). Airflow requirements are used to determine the cross-sectional dimensions, and the second section strikes the ideal balance between pressure stabilization and flow acceleration. The expansion angle of third section influences velocity recovery, wherein the expansion angle typically ranging from 10 degrees to 30 degrees (selected from distinct ranges such as 10 degrees to 15 degrees, 16 degrees to 22 degrees and 23 degrees to 30 degrees) to maintain steady-state conditions.

In another embodiment, a first converging section may connect the first section and the second section, wherein a first angular angle defines the contraction profile. The second section and a third section are connected by a second converging section, where the expansion profile is defined by a second angular angle. To provide controlled contraction and assure uniform velocity distribution, the first angular angle is usually selected between 5 degrees and 15 degrees (selected from distinct ranges such as 5 degrees to 8 degrees, 9 degrees to 12 degrees and 13 degrees to 15 degrees). The second angular angle ranges between 10 to 30 degrees (selected from distinct ranges such as 10 to 15 degrees, 16 to 24 degrees and 25 to 30 degrees) to achieve gradual expansion and prevent pressure fluctuations that could lead to flow instabilities. Each converging section enhances fluid energy efficiency and stabilizes flow dynamics by preserving airflow and minimizing abrupt pressure variations. In the first converging section, flow compression minimizes the effects of recirculation while increasing local air velocity. The second converging section enables controlled expansion to optimize velocity recovery without producing excessive backpressure.

Optionally, the flap comprises a dielectric film in the form of a pouch that receives a dielectric liquid. A pair of electrodes are disposed on opposite sides of the dielectric film, wherein the electrodes generate an electrostatic potential difference when a voltage is applied. The term *"dielectric film",* as used herein refers to a thin, flexible, and electrically insulating material that can undergo mechanical deformation when exposed to an electrostatic potential difference. The term *"pouch",* as used throughout the current disclosure, refers to a flexible, sealed enclosure formed of electrically insulating material, designed to contain and retain a dielectric liquid. The pouch allows volumetric and geometric deformation in response to applied electrostatic forces, thereby enabling controlled actuation of surrounding components. By causing deformation in the dielectric film, the electrostatic potential difference modifies the recirculation of airflow inside the housing. The term *"electrodes",* as used throughout the present disclosure, refers to a pair of conductive layers or elements that are disposed on opposite sides of the dielectric film. The electrodes are configured to produce the necessary electrostatic potential difference by creating an electric field across the dielectric film in response to an applied voltage from the control unit. The electrodes can be made of carbon-based conductors, copper, or aluminium, and they can be printed, sputter-deposited, or laminated onto the film. The term *"electrostatic potential difference"* as used herein refers to the voltage difference applied across the pair of electrodes, resulting in the creation of an electric field that exerts electrostatic forces on the dielectric film. The potential difference causes interactions (attractive or repulsive) that result in film deformation, which is used as the basis for mechanical actuation within the system. The term *"deform",* as used herein refers to the controlled change in shape, position, or geometry of the dielectric film in response to electrostatic forces generated by the applied voltage. The deformation may include bending, stretching, contracting, or bulging of the dielectric film to alter airflow pathways within the housing. The term *"regulate the recirculation",* as used herein refers to the dynamic adjustment of the flow proportion of the mixed air stream that is reverted into the housing, as opposed to being discharged into the ambience. Stabilizing the thermal environment around the fuel cell, controlling internal humidity, and managing temperature all depend on the recirculation fraction. Based on a signal from the environment, the control unit calculates the necessary voltage and applies it to the two electrodes to modify the recirculation fraction of exhaust stream. The flap thus utilizes an electrically controlled response mechanism for adjusting airflow pathways without using mechanical actuation. The dielectric liquids are chosen based on their properties such as permittivity, breakdown voltage, and viscosity. When a specific voltage is applied to the electrodes, electrostatic potential difference is established, deforming the dielectric film. The deformation alters the position or shape of the flap, which then modifies the cross-sectional area available for the recirculation and discharge pathways. For instance, if the flap bends inward toward the discharge outlet, flap restricts the discharge path and increases the recirculation fraction. Conversely, if the flap deforms away from the discharge outlet to increases the discharge path and reduces the recirculation fraction. The control unit calculates the necessary voltage from the environmental condition signal and drives the flap accordingly, providing accurate and real-time control of internal airflow distribution to provide optimal thermal and moisture conditions inside the housing. The dielectric-based actuators show fast response times, low power consumption, and high operational reliability. As the movement is induced by electrostatic forces is much faster than motors or mechanical linkages, the control unit can quickly regulate (as compare to motor-based flap) fraction of recirculation fraction to be directed into the housing. Further, deformation of the dielectric film controlled at granular level at higher precision and repeatable, allowing fine-tuned regulation of the recirculation fraction in response to changing environmental condition.

In a possible embodiment, the control unit may determine the recirculation fraction of the exhaust stream by utilizing the environmental condition signals for analysing temperature changes, humidity levels, and air flow patterns within the housing. The control unit calculates an optimal recirculation fraction (based on the analysis) to regulate thermal conditions within the housing. Using a processing circuit, the control unit applies predefined parameters to compare sensed values against threshold values, adjusting the flap to modulate airflow distribution. By adjusting the flap dynamically in response to the environmental condition signals, airflow distribution is optimized and overheating or overcooling is prevented. The recirculation fraction is varied between 10% and 55% (selected from distinct ranges such as 10% and 25%, 26% and 40% and 41% and 55%) under normal thermal operating conditions and between 55% and 85% (selected from distinct ranges such as 55% and 65%, 66% and 75% and 76% and 85%) under extreme thermal operating conditions. The control unit and the flap actuation mechanism can communicate with each other to enable rapid modifications to maintain thermal stability.

In another embodiment, the sensing unit may comprise a humidity sensor, a first temperature sensor, a second temperature sensor, and a third temperature sensor. The term *"temperature sensor",* as used throughout the present disclosure, refers to an electrical or electronic sensing component configured to detect and measure thermal energy levels expressed in temperature units. When a temperature is sensed, the temperature sensor produces an electrical signal that is sent to the control unit for processing. The term *"humidity sensor",* as used throughout the present disclosure, refers to an electronic sensing component configured to detect and measure moisture content in the form of relative humidity within a defined volume of air. The control unit utilizes the signal from the humidity sensor, to assess the possibility of condensation or anomalies related to moisture. To evaluate moisture levels, the humidity sensor calculates the relative humidity inside the housing. The first temperature sensor is disposed at the air inlet to sense a first temperature of the ambient air stream before entering the housing. The second temperature sensor is positioned at the discharge port to measure a second temperature of the exhaust stream exiting a fuel cell. The third temperature sensor detects a third temperature of the fuel cell surface to evaluate heat generation intensity. The use of the terms *"first" "second"* and *"third"* temperature sensors throughout the present disclosure is for clarity of reference only, and does not imply a mandatory sequence or restriction in implementation. Optionally, a single temperature sensor may be deployed and configured to receive sampled airflow from more than one location, such as from the air inlet, discharge port, and fuel cell surface. The sensor can be integrated with valve-controlled sampling lines or airflow redirection ducts to selectively or sequentially monitor temperature at various system locations. The sensors transmit environmental condition signals to the control unit for processing. Humidity sensors may be selected from capacitive humidity sensors, resistive humidity sensors, and thermal conductivity-based humidity sensors. Temperature sensors may be selected from thermocouples, resistance temperature detectors, and infrared temperature sensors.

In yet another embodiment, the discharge port may receive and discharge condensate moisture from the surface of fuel cell, thereby preventing water accumulation that could affect fuel cell performance. To allow for the gravitational drainage of accumulated moisture, the discharge port is placed at a low point inside the housing. A conduit is connected to the discharge port to direct collected condensate to a recirculation system or an external drainage system. The discharge rate of condensate moisture depends on humidity levels within the housing, airflow patterns, and the operational conditions of fuel cell. Moisture collection within the housing is managed through a combination of passive drainage and active expulsion mechanisms, including pressure-driven ejection or vacuum-assisted extraction. A valve may be incorporated into the conduit to maintain unidirectional moisture expulsion and stop backflow.

In yet another embodiment, the direction of the ambient air stream may not be co-linear and opposite to the direction of the exhaust stream. By avoiding direct interference from opposite direction between ambient air stream and exhaust stream, the configuration (non-co-linear and opposite) enhances thermal management and permits controlled recirculation. The non-co-linear configuration minimizes turbulence and random flow interruptions by reducing pressure imbalances along the exhaust air stream and the inlet air stream. Avoidance of early intake and exhaust air mixing, and offsetting of air streams in direction (ambient air stream and exhaust stream) allows for smooth temperature transition through the thermal management system. The angular displacement provides controlled velocity gradients and a uniform pressure distribution within the housing. Selective airflow routing is facilitated by the non-opposite directions of the inlet air stream and exhaust air stream, where selective airflow routing allows intake air to follow a guided path without intersecting exhaust discharge. Pressure fluctuations, which can lead to unstable thermal conditions within the housing, are prevented by introducing a spatial offset between the inlet air stream and the exhaust air stream.

In another embodiment, the housing may comprises a flow-regulating member that is disposed at the air inlet to control the ambient air stream flow. The flow-regulating member is implemented to control airflow parameters such as velocity, mass flow rate, and turbulence intensity in a housing. The flow-regulating member is implemented based on external conditions to control the air inlet to modulate desired airflow parameters. The flow-regulating member controls the intake airflow profile by varying an inlet opening cross-section, where the cross-section is controlled between 20% and 80% (selected from distinct ranges such as 20% to 40%, 40% to 60% and 60% and 80%) of a maximum inlet area. The adjustable airflow restriction controls excessive pressure drops while enabling constant air delivery during dynamic conditions. The flow-regulating member is not affected by external factors like ambient temperature fluctuations and external air pressure fluctuations. The flow-regulating member provides localized control of air inlet preventing random pressure spikes on downstream thermal management processes. The flow-regulating member stabilizes intake air parameters by enabling constant flow rate modulation. A control mechanism implemented with the flow-regulating member enables automated or manual modulations of air intake parameters to respond to dynamic operating conditions.

In another embodiment, the housing may comprise an air inlet channel between the air inlet and the merge section, wherein the air inlet channel is situated on a perimeter of the fuel cell to pre-heat an air stream. The term *"air inlet channel",* as used throughout the present disclosure, refers to a dedicated flow passage extending from the air inlet to the merge section, which is configured to transport the ambient air stream independently from the internal environment of the housing. The air inlet channel provides a separate and isolated pathway for the incoming ambient air stream, thereby preventing premature mixing with the recirculation fraction or exposure to the internal humidity and thermal conditions within the housing. The air inlet channel act as a guided path for direction of ambient air to the merge section, wherein thermal exposure to the fuel cell provides controlled pre-heating. The term *"positioned on a perimeter",* as used herein refers to the placement of the air inlet channel along the external boundary of the fuel cell, enabling close proximity thermal interaction between the fuel cell and the ambient air stream. A channel-based airflow direction control facilitates controlled temperature adjustment before intake air mixing with the exhaust stream. As the ambient air flows through the air inlet channel, which is thermally coupled to the external surface of the fuel cell, residual heat from the operating fuel cell is transferred to the air stream. The temperature of air stream can be gradually raised before entering the merge section because of the heat exchange mechanism. After the pre-heated air stream reaches the merge section, the pre-heated air stream is mixed with the exhaust stream to create an energy-efficient and thermally consistent air stream. Further, the air inlet channel enables gradual rise in temperature before ambient air reaches the merge section, thereby reducing thermal shock and providing uniform heat distribution. A controlled inlet air pre-heating prevents random temperature change within the housing or merge section by providing persistent warm-up behaviour.

In one configuration, the air inlet channel is shaped in the form of a spiral path, the fuel cell being positioned centrally within the spiral. The spiral formation enables the channel to wind around the fuel cell along perimeter thereof, thus providing maximum effective contact surface area between the air stream and the fuel cell. The spiral path enhances the length of thermal interaction, enhancing the heat transfer efficiency, quicker heating response, and even temperature distribution of the air stream before mixing. In another embodiment, the housing is exposed to the range of 243 Kelvin (K) to 278 K (selected from distinct ranges such as 243 K to 250 K, 251 K to 260 K, 261 K to 270 K and 270 K to 278 K). In conventional fuel cell-based energy system, condensation of water vapor of discharge stream is common phenomena when fuel cell is exposed to such low ambient temperature (e.g., 243 K to 278 K), especially in cold climatic conditions. The present system is specifically adapted to operate under low-temperature environments, including winter seasons, high-altitude conditions, or in specific applications such as airships, drones, electric aircraft, and high-elevation mountain range monitoring stations, where fuel cells are used as the primary energy source. Through dynamic changes in airflow properties based on sensed environmental conditions, the system controls the discharge fraction, recirculation fraction, and internal humidity levels. Through the maintenance of internal temperatures above the dew point of the discharge stream, this thermal control method avoids water vapor condensation on critical surfaces. The system makes it possible to deploy fuel cell technology reliably in remote and harsh environments and to generate power continuously without the need for additional heating or insulation subsystems by enabling efficient operation in the temperature range of 243 K to 278 K.

### DETAILED DESCRIPTION OF DRAWINGS

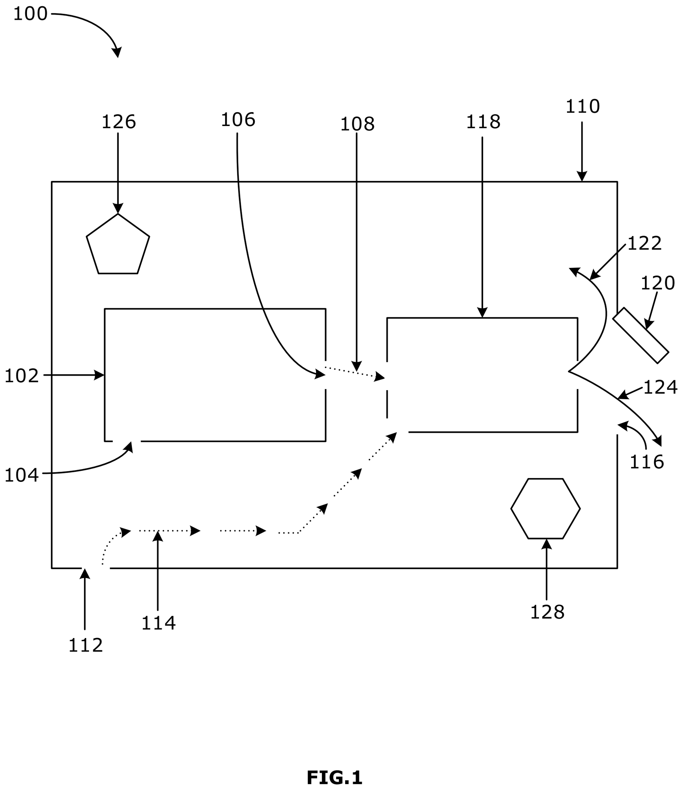

Referring to **FIG. 1****,** there is shown a diagram of a thermal management system **100** as per one embodiment of the present disclosure. The thermal management system **100** comprises a housing **110** that houses the fuel cell **102.** The fuel cell **102** comprises an intake port **104** and a discharge port **106** that discharges an exhaust stream **108** exiting from the fuel cell **102.** The housing **110** incorporates an air inlet **112** that receives an ambient air stream. The housing **110** further includes an exhaust outlet 116. Controlled air release from housing **110** into the surrounding environment is rendered feasible by exhaust outlet 116. To keep the housing **110** operating at the desired level, the interaction between the exhaust stream **108** and the ambient air stream **114** is further controlled.

A merge section **118** is fluidically coupled with the exhaust outlet **116** and the discharge port **106.** The merge section **118** receives the exhaust stream **108** from the discharge port **106** and the ambient air stream **114** from the air inlet **112.** The exhaust and ambient air streams can be mixed to create a mixed air stream through the merge section **118.** The merge section 118 controls temperature and moisture levels of the fuel cell **102** to create a controlled environment inside the housing **110.** The mixing process occurring within the merge section **118** maintains a balance between the received ambient air stream **114** and the discharged exhaust stream **108** before directing the mixed air stream towards the exhaust outlet **116.**

The flap **120** is disposed at the exhaust outlet **116.** The flap **120** controls at least one of a recirculation fraction **122** and a discharge fraction **124** of the mixed air stream. The recirculation fraction **122** is directed within the housing **110** to influence the internal temperature and humidity levels surrounding the fuel cell **102.** Exhaust outlet **116** directs the discharge fraction **124** into the surrounding environment. In relation to the recirculation fraction, the discharge fraction **124** is oriented at an angle. The flap **120** dynamically regulates the airflow within the system **100** by controlling the proportions of the mixed air stream that are either retained within the housing **110** or expelled into the ambient environment. The sensing unit **126** generates an environmental condition signal upon sensing at least one of a first temperature of the received ambient air stream, a humidity level of the housing **110,** a second temperature of the exhaust stream **108,** and a third temperature of the fuel cell **102.** Plurality of sensors in the sensing unit **126** monitors the environmental factors influencing the thermal management of fuel cell **102.** The sensing unit **126** provides data regarding variations in temperature and humidity levels, which influence the recirculation fraction **122** and discharge fraction **124.**

The control unit **128** is operatively coupled to the sensing unit **126** and the flap **120.** The control unit **128** processes the generated environmental condition signal to determine a required position of the flap **120.** The control unit **128** dynamically adjusts the flap **120** to regulate the recirculation fraction **122** and the discharge fraction. The control unit **128** maintains real-time control over airflow distribution by continuously responding to variations detected by the sensing unit **126.** The control unit **128** assures that the recirculated and discharged air fractions maintain an ideal temperature and humidity level within the housing **110.**

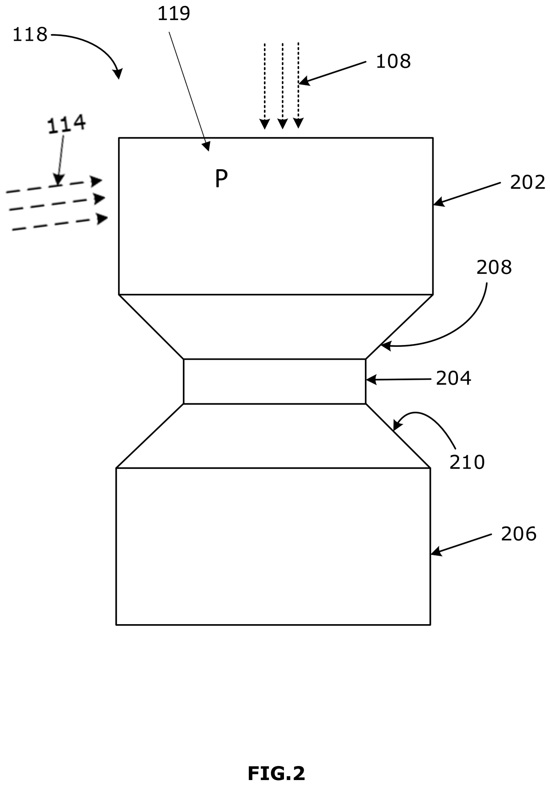

Referring to **FIG. 2****,** a merge section **118** is depicted as per one embodiment of the present disclosure. The merge section **118** shows with a ref nr. **119** a merge point **(P)** of the ambient air stream **114** and exhaust stream **108,** and the angle formed by the vectors (vectors as shown in the figure) of the ambient air stream **114** and the exhaust stream **108** is referred to relative to this merge point **(P).** The merge section **118** comprises a first section **202,** a second section **204,** and a third section **206.**

The first section **202** is disposed towards an entry point of the exhaust stream **108.** The second section **204** is disposed downstream of the first section **202,** wherein a cross-sectional area of the second section **204** is smaller than the cross-sectional area of the first section **202.** The third section **206** is disposed downstream of the second section **204,** wherein the cross-sectional area of the second section **204** is smaller than the cross-sectional area of the third section **206.** By allowing for controlled acceleration and deceleration of the mixed air stream, merge section **118** optimizes the flow characteristics of the thermal management system. The reduction in cross-sectional area in the second section **204** increases the velocity of the exhaust stream **108,** enabling the mixing of the ambient air stream **114** with the exhaust stream **108.** The first section **202** and the second section 204 are connected through a first converging section **208,** wherein the first converging section **208** is arranged at a first angular angle with respect to the first section **204** and the second section **206.** Further, the second section **204** and the third section **206** are connected through a second converging section **210,** wherein the second converging section **210** is arranged at a second angular angle with respect to the second section 204 and the third section **206.**The expansion in the third section **206** reduces flow resistance and minimizes turbulence, improving uniform temperature distribution within the housing. The structured flow path of the merge section **118** prevents random pressure changes, reducing thermal stress on system components. The transition between different sections stabilizes airflow patterns, promoting efficient heat dissipation while maintaining balanced pressure conditions.

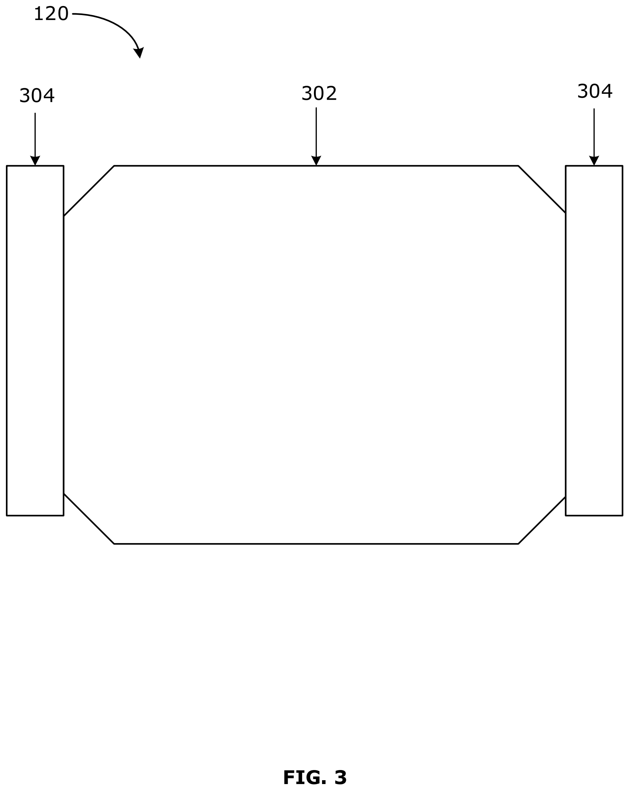

Referring to **FIG. 3****,** a flap **120** is shown in accordance with the embodiments of the present disclosure. The flap **120** comprises a dielectric film **302** in the form of a pouch that receives a pair of electrodes **304** disposed on opposite sides of the dielectric film **302** that securely hold a dielectric liquid. The pair of electrodes **304** generate an electrostatic potential difference across the dielectric film **302** when a voltage is applied, causing the dielectric film **302** to deform to regulate the recirculation fraction **122** of the exhaust stream **108** within the housing **110.** The control unit **128** determines a required voltage, based on the environmental condition signal, to be applied to the pair of electrodes **304** to adjust the recirculation fraction **122** of the exhaust stream **108** within the housing **110.** Dynamic control over the recirculation and discharge fractions of mixed air stream is achieved by the precise modulation of the airflow path made possible by the deformation of the dielectric film **302.** The electrostatic actuation mechanism minimizes mechanical wear and eliminates the need for complex moving parts, improving the reliability and responsiveness of airflow regulation. By selectively deforming the dielectric film **302,** the thermal distribution of housing **110** can be optimized. Since electrostatic actuation uses less power than traditional mechanical actuators, the combination of the dielectric film **302** and the two electrodes **304** enables energy-efficient operation.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A thermal management system (100) for a fuel cell (102), wherein the fuel cell (102) comprising an intake port (104), and a discharge port (106) to discharge an exhaust stream (108) exiting from the fuel cell (102), the system (100) comprising:
a housing (110) is configured to house the fuel cell (102), wherein the housing (110) comprising:
an air inlet (112) to receive an ambient air stream (114);
an exhaust outlet (116);
a merge section (118) is fluidically coupled with the air inlet (112), the exhaust outlet (116) and the discharge port (106), wherein the merge section (118) is configured to receive the exhaust stream (108) and the ambient air stream (114) to create a mixed air stream;
a flap (120) is disposed at the exhaust outlet (116) and configured to control at least one of:
a recirculation fraction (122) of the mixed air stream, wherein the recirculation fraction (122) is directed within the housing (110); and
a discharge fraction (124) of the mixed air stream, wherein the discharge fraction (124) is directed into an ambiance environment through the exhaust outlet (116), wherein the discharge fraction (124) is directed at an angle with respect to the recirculation fraction (122), wherein the angle is selected from 1 to 89 degrees ;
a sensing unit (126) is configured to generate an environmental condition signal upon sensing at least one of:
a first temperature of the received ambient air stream (114);
a humidity level of the housing (110);
a second temperature of the exhaust stream (108); and
a third temperature of the fuel cell (102);
a control unit (128) is operatively coupled to the sensing unit (126) and the flap (120), wherein the control unit (128) is configured to process the generated environmental condition signal to determine a required position of the flap (120) to dynamically adjust the flap 120 to regulate the recirculation fraction (122) and the discharge fraction (124).

2. The thermal management system (100) according to claim 1, wherein the housing (110) comprising a fan configured to create a negative pressure within the housing (110), wherein the created negative pressure causes suction of the ambient air stream (114) through the air inlet (112).

3. The thermal management system (100) according to any of claims 1 or 2, wherein the fuel cell (102) is disposed space apart from the housing 110 to define a space between an external surface of the fuel cell 102 and an internal surface of the housing 110, wherein the recirculation fraction 122 is directed into the defined space.

4. The thermal management system (100) according to claims 1 to 3, wherein the internal surface of the housing (110) comprises at least one of:
at least one flow director is configured to that enable circulation of the recirculation fraction (122) around the fuel cell (102); and
at least one turbulence-inducing vane is configured to disrupt a flow pattern of the recirculation fraction (122) within the defined space.

5. The thermal management system (100) according to claims 1 to 4, wherein the merge section (118) comprises:
a first section (202) is disposed towards an entry point of the exhaust stream;
a second section (204) is disposed towards downstream of the first section (202), wherein a cross-sectional area of the second section (204) is smaller than a cross-sectional area of the first section (202); and
a third section (206) is disposed towards downstream of the second section (204), wherein the cross-sectional area of the second section (204) is smaller than a cross-sectional area of the third section (206).

6. The thermal management system (100) according to claims 1 to 5, wherein the first section (202) and the second section (204) are connected through a first converging section, wherein the first converging section (208) is arranged at a first angular angle with respect to the first section (204) and the second section (206), and wherein the second section (204) and the third section (206) are connected through a second converging section, wherein the second converging section (210) is arranged at a second angular angle with respect to the second section (204) and the third section (206).

7. The thermal management system (100) according to claims 1 to 6, wherein the flap (120) comprising:
a dielectric film (302) in the form of a pouch that is configured to receive a dielectric liquid;
a pair of electrodes (304) disposed on opposite sides of the dielectric film (302), wherein the pair of electrodes (304) is configured to generate an electrostatic potential difference across the dielectric film when a voltage is applied, causing the dielectric film to deform to regulate the recirculation fraction (122) of the exhaust stream (108) within the housing (110);
wherein the control unit (128) is configured to determine a required voltage, based on the environmental condition signal, to be applied to the pair of the electrodes (304) to adjust the recirculation fraction (122) of the exhaust stream 108 within the housing (110).

8. The thermal management system (100) according to claims 1 to 7, wherein the control unit (128) dynamically determine the recirculation fraction (122) of the exhaust stream 108 based on the environmental condition signal.

9. The thermal management system (100) according to claims 1 to 8, wherein the sensing unit (126) comprises:
a humidity sensor is configured to monitor the relative humidity within the housing (110);
a first temperature sensor is positioned at the air inlet (112) to sense the first temperature;
a second temperature sensor is positioned at the discharge port (106) to sense the second temperature of the exhaust stream (108); and
a third temperature sensor to sense the third temperature of the fuel cell (102) surface.

10. The thermal management system (100) according to claims 1 to 9, wherein the housing (110) further comprises a discharge port to receive and discharge a condensate moisture from the fuel cell (102) surface.

11. The thermal management system (100) according to claims 1 to 10, wherein a direction of the ambient air stream (114) is not co-linear and opposite to a direction of the exhaust stream (108).

12. The thermal management system (100) according to claims 1 to 11, wherein the housing (110) comprises a flow-regulating member disposed at the air inlet (112) to adjust the flow of the ambient air stream.

13. The thermal management system (100) according to claims 1 to 12, wherein the housing (110) comprises an air inlet channel that connects the air inlet (112) to the merge section (118), wherein the air inlet channel is positioned on a perimeter of the fuel cell (102) to pre-heat the air stream.

14. The thermal management system (100) according to claims 1 to 13, wherein the housing (110) is exposed at a temperature in range of 243 K to 278 K.
